# EUROPEAN PATENT APPLICATION

(11) **EP 4 465 222 A1**
(43) Date of publication of application: **20.11.2024**
(21) Application number: 24176904.1
(22) Date of filing: 20.05.2024
(51) Int. Cl.: G06Q 10/0833, G06Q 50/04

(54) **FABRIC ROLL TRACEABILITY SYSTEM AND CORRESPONDING FABRIC ROLL LABELLING STATION**

(30) Priority: 18.05.2023 PT 2023118659
(71) Applicant: Smartex Unipessoal Lda, 4100-320 Porto (PT)
(72) Inventor: MARTINS LOUREIRO, GILBERTO, 4150-603 Porto (PT); CARVALHO RIBEIRO, PAULO ALEXANDRE, 4465-040 São Mamede de Infesta (PT); MENDES DA ROCHA, ANTÓNIO JORGE, 4415-607 Crestuma, Vila Nova de Gaia (PT); DE LIMA ALVES, FREDERICO, 4450-604 Leça da Palmeira (PT); FERREIRA DE BRITO, JOÃO PEDRO, 4200-389 Porto (PT); SOBRINHO CARVALHO, BEATRIZ, 4715-594 Braga (PT); BERNARDINO CABRAL, MICAEL, 4050-399 Porto (PT)
(74) Representative: Patentree

(57) **Abstract**

Fabric roll traceability system comprising an electronic data processor arranged to: receive indication of new fabric roll; issue an identification code for the fabric roll; create an image including said identification code with an encoded 1D or 2D barcode comprising said identification code; outputting said image for printing a label to be applied to the fabric roll and corresponding fabric roll labelling station.

## Description

### TECHNICAL FIELD

The present disclosure relates to a track system and method for controlling the textile supply chain, of a fabric-roll produced in a circular knitting machine, and more particularly to a device employed in manufacturing operations to track the knitted fabric roll.

### BACKGROUND

The other traceability solutions depend on manually inputted data, and hand written information and contain significantly less reliable information than the data propagated by disclosed invention.

One of the main disadvantages of similar solutions are:
Solutions based on the use of materials with specific chemical of physical properties, such as embedded luminescent pigments, on the fibre right at the raw source or spinning mill and requires expensive hardware to read the labels an expensive and complex process, limited variability in the amount of existing piments reduces the traceability effectiveness.
only have batch level identification and tracking and not at roll level;
solutions only software-based are not reliable and lead to "trash data", since it's not possible to verify the origin of the data and it's veracity;
our solution provides each textile roll that is digitalised (assuring 100% certified inspection on the knitting stage) an unique identifier that is traceable and associated to information about the fabric roll;
Every inspected role is assigned to an ID (digital twin) and labelled with a tag, that can be heat pressed, for physical review and traceability in the factory where is produced and in the following processes, such as dyeing and finishing, in other factories that can be located in other countries.
Each ID can be tracked and consulted for Traceability purposes by all the stakeholders (such as fashion brands, legal authorities, consumer, recycling centres) in the value chain, allowing building trust between commercial exchanges.

The problems of current solutions are:
1. No way of encoding information about the physical roll, such as its defects, quality classification, into a QR code that validates that the code corresponds to that physical roll;
2. Lack of data recording, tracking and analysis across the supply chain (to manage conflicts and production quality) and integration of data from different sources such as raw materials and fibre producers, knitting and weaving factories and the later stages of dyeing and finishing;
3. Lack of transparent communication across the industry (to share with Fashion Brands & final clients) having impact in the final quality of the textile products, wrongful environmental claims, with no processes for control of produced textiles;
4. Difficulty in controlling and tracing single fabric rolls across the value chain for quality and production control and factory management;
5. High environmental impacts, that are not accurately measured, related to reduced efficiency in processes and manufacturing, and limited knowledge of the industry problems;

The lack of traceability tools that generate verifiable data is a problem for textile companies and fashion brands that are not able to provide verified data to clients and public authorities and results from:
Lack of traceability in the textile industry;
Low quality of the data that is generated and its reliability;
No existence of reliable tools that connect the physical rolls of fabrics to the digital information associated to these rolls;
Materials' origin and composition gets lost, or tampered with, in the value chain;
There is no Production quality history linking the different textile companies;
   Lack of information inside companies - regarding productivity and other metrics that could help improve performance and identify bottle necks and sources of waste and inefficiency;
   Lack of information on the items themselves - how many defects and their positions, leading to mistrust between different companies and playing the "blame game" where this is no reliable data to identify the source of defects, often with serious legal and financial consequences;

The disadvantages of the solution of the prior art:
Use of labels requires a manual application and reading in further steps and may not survive the finishing and dying processes that have high temperature, chemicals with high and/or low pH that can damage the labels, mechanical stress due to textile processes;
Writing the roll identification with markers, that many times cannot be read latter in the processes, or use of papers attached to the rolls that can get lost, and have to be filled by hand resulting in low digitalization of the process and rolls getting lost of mislabelled;
No integration with other data platforms, limiting the data analyses impact and actionability;
Existing technologies many times are not easy to use at the factory floor and are complex and confusing for the workers;
Data that is imputed in the systems about the rolls quality, materials, impact is based in self-reported data and has to be validated by third parties in a regular basis;
Data collection and transfer is complex and tedious and prone to errors, either voluntary or unvoluntary;

In the market, there are various traceability options, including those for roll-to-roll tracking.

These facts are disclosed to illustrate the technical problem addressed by the present disclosure.

### GENERAL DESCRIPTION

The proposed solution is preferably applied to the production of knitted fabrics on circular knitting machines. After production, a label containing basic information about the produced roll and a QR code is printed and applied to the knitted fabric roll. This label will allow tracking the roll throughout the subsequent processes, which include intermediate processes such as dyeing and finishing of the fabric. During the intermediate processes, such as dyeing and finishing, the labels and fabric rolls will be subjected to more demanding conditions. The labels must withstand temperatures above 140°C in drying or several treatment processes during dyeing and finishing. Additionally, the labels and fabric rolls will be exposed to humidity and water during washing and dyeing processes, requiring the labels and printed inks to be water-resistant to ensure their readability and integrity over time. Some of the conditions it has to withstand are:
Temperature: During dyeing and finishing processes, the labels will be subjected to high temperatures, which can reach up to 160°C. These high temperatures can compromise the integrity of the labels and affect the readability of the QR code;
Exposure to water, humidity, and steam: Washing and finishing processes expose the labels to water, humidity, and steam. If the labels are not water and humidity resistant, they can be damaged or become unreadable, compromising the proper tracking of the fabric rolls;
Aggressive chemical environments: In textile production environments, chemicals with variable pH, ranging from 4 to 11, depending on the processes, may be used. Exposure to these aggressive chemical environments can deteriorate the labels, making them unreadable or compromising their functionality;
Abrasion and pressure: During calendering processes, the labels are subjected to abrasion and pressure and, if the labels are not resistant enough to withstand these conditions, they can wear out quickly or detach from the fabric rolls, affecting the precise tracking of the products:

The objects to be tracked by the solution include mainly the knitted fabric rolls produced on circular knitting machines, regardless of their brand and model. This fabric can vary in terms of structure, such as jacquard, jersey, interlock, piqué, among others. Additionally, the fabric rolls can be composed of various fibres, whether natural, synthetic, or artificial.

Smartex system for traceability of knitted fabric rolls allows for a more granular integrated and accurate data system combining the physical label attached to each produced roll with the digital platform for the data management containing information about the rolls of fabric;
The proposed track and trace solution can be integrated with other software solutions to add value, initially with the companies' ERPs (Enterprise Resource Planning) for process and product management, in addition to tracking their location both within the factory where they are produced and in the subsequent processes. A reduction in costs related to the processes of tracking and locating rolls is an outcome, resulting in fewer human resources involved and a reduction in time wasted in these processes. Additionally, an improvement in efficiency and transparency in relations between companies is obtained, measured by the number of complaints related to quality and delivery times of the fabric rolls.

Another important impact is the reduction or elimination of time spent on intermediate inspection processes due to greater confidence in the quality and integrity of the products throughout the production process, combining the information from the previous automated inspection in the circular knitting machine where the fabric is produced with the label.

The target company profile for the solution covers various segments of the textile industry, primarily knit producers, who will aim to ensure the quality and traceability of their products, facilitate communication with customers, and have more agile process management.

The importance of the track and trace solution for this integration with ERPs is to ensure a comprehensive and real-time view of the product flow throughout the entire production chain and more efficient process management, resource optimization, and informed decision-making based on updated data on the location and status of the fabric rolls.

The following pertains to traceability technology breakdown. Traceability provided by the present disclosure is powered by a collection of different technologies. The Vision System detects all relevant types of defects in knitted fabrics produced by Circular Knitting Machines (open-width and tubular) using AI and ML algorithms and integrates into existing textile machinery with a seamless set of cameras, multispectral lighting, and sensors. Using artificial intelligence and machine vision it's possible to detect in real time the production of defects, stop the machine in the case of a continuous defect, and create a digital twin of the fabric roll, mapping existing defects The inspection system is supported by a comprehensive software platform for factory management, article management, stock management and data integration. The printing station used for the track and trace generates the physical label that links the physical roll to the digital roll, and contains information about the roll (such as date of production, raw material used, fabric structure, machine and factory where it was produced) and a QR code. After the production of the roll the label is applied on it using a heat press, that fuses the label into the fabric, making it non removable. This label will be the physical identification of the roll throughout the following production steps, enabling the addition of information in the digital platform associated to each of the rolls. The Integrations software enabled supplementation of Smartex production data with production data with data in factory ERPs and Manufacturing Execution Systems (MES). The Web Platform contains the digital roll map and other digital representations/tools of the data. This integration allows for the collection and association of additional information with the fabric rolls, such as: order details; raw materials used, production plan, production timings, other relevant production data. All this information is integrated into the proprietary database and associated with the unique QR code attached to each fabric roll. This comprehensive data collection and integration enables a complete digital representation of the fabric roll and its production history, accessible through the web platform.

The following pertains to vision system that prior to the applications of the label with the roll information is used to inspect the fabric during its production in circular knitting machines and produced a digital image of the roll with identification of defects The vision system is based in:
Artificial intelligence (Al) Inspection: Algorithms for defect segmentation and exact identification in the image of where the defect is located;
Algorithms for defect detection without context of prior fabric;
Algorithms for defect detection utilizing context of prior fabric images;
Machine stop autopilot - automatic optimization of stoppage thresholds (currently a manual setting) to stop the knitting machine in the case of production of continuous defect;
Fabric Imaging and Metadata (machine info, RPM, manual inputs), with information that is used later to support the process optimization and identification of defects sources and causes.

The physical print station plays a crucial role in the identification of the knit fabric, ensuring the efficiency and traceability of the product. The heat press is used to apply labels to the rolls of knit fabric, using heat to securely affix the label without damaging the base material. It is operated by using a combination of heat and pressure to transfer the labels onto the substrate material such as textile fabric. It consists of two platens: a top platen that heats up and a bottom platen where the item to be printed is placed. The label, that may or may not have a transfer paper, is placed on the substrate material, and then the heated platen is pressed down onto it, where the heat and pressure cause the label to adhere to the material, resulting in a permanent transfer. The temperature and pressure settings can be adjusted depending on the type of material of the label and type of fabric, and the specific requirements of the label that is used. The tablet serves as a user interface to operate the station, allowing operators to enter and access information, as well as control the labelling process. The label printer is responsible for printing labels that contain essential information such as factory name, date of production, code of production, machine where it was produced, information about the roll quality, types of defects the roll contains and the QR code, which are fundamental for tracking the knitted fabric roll through the subsequent production processes. Finally, the fabric roll stand keeps the knit fabric roll stable during the label application, assures an ergonomic position for the operator applying the label and ensuring that the label is correctly applied and that the roll is ready to move on to the next stage of the manufacturing process. Together, these components form an integrated system that enhances production management and the quality of the final product.

LOOP Label - ID: Short, human-readable ID with the physical location that roll was weighed, and label printed (print station ID) encoded into it. This is obfuscated so that information about the source of the roll is not leaked unintentionally. QR code containing URL to roll e-passport & digital twin. Possible addition: Hash code generated from roll images, such that it can be verified that the label is indeed from this roll. This "verification" would require re-running the hash on the images and comparing the images to the physical roll (which, after undergoing future processes that change the roll, may make it difficult to see identifying characteristics of the roll). Label Survivability Optimization -This is achieved by employing double layer labels specifically designed for ribbed fabrics, which are prone to distortion during the different textile processes. Additionally, the method includes a URL shortening strategy that effectively reduces the amount of data encoded within the QR code. This reduction in data allows for an increase in pixel size, which enhances the robustness and scan-ability of the QR code under a range of conditions and readers characteristics. Furthermore, strategic adjustment of the label's position and dimensions is proposed to accommodate different fabric types and garment designs, ensuring that the QR code remains unobstructed, easily accessible and it's not removed during the production steps such as sewing/cutting of multiple fabric rolls. This comprehensive approach to label survivability optimization addresses the challenges faced in maintaining QR code integrity during the rigorous conditions of dye house and finishing processing.

The following pertains to Integrations. System of Workflows to verify data accuracy - In order to develop a generic tool that enables the traceability of the rolls throughout the value chain, factory workflows were analyzed, and a set of workflows were developed and implemented that ensure that labels are placed on the correct rolls, reducing the error in roll labelling and assuring 100% traceability of the fabric rolls. The implementation of the traceability platform typically involves a minor adjustment to existing workflows in the factories (i.e. the order in which they produce → weigh → inspect → label rolls), and uses software features that prevent them from breaking this workflow.

The proposed solution replaces outdated methods that rely on pen and paper for labelling fabric rolls, where either paper sheet is attached to the rolls or the information is written directly in the roll, which are prone to errors and do not allow for proper traceability and process digitalization. These traditional methods often result in incorrect labelling of rolls, making it difficult to track their movement throughout the production process. This lack of traceability can lead to logistical problems, such as lost or misplaced rolls, delays in production, and customer dissatisfaction due to inaccurate deliveries.

By implementing the traceability platform, factories can streamline their workflows and ensure that labels are accurately placed on the correct rolls. The system incorporates software features that prevent deviations from the established workflow, reducing the likelihood of errors in roll labelling and guaranteeing 100% traceability of the fabric rolls. This automated approach eliminates the need for manual pen and paper methods, which are inherently less reliable and more prone to human error.

The integration of the traceability platform into existing factory workflows requires only minor adjustments, making it easy to implement and adopt. By transitioning from manual to digital methods, factories can improve the efficiency and accuracy of their roll labelling process, ensuring that each roll can be traced throughout the entire value chain.

The traceability solution not only integrates with the Enterprise Resource Planning (ERP) systems of textile companies but also collects crucial information from other software's used by these companies. This data is essential for creating a comprehensive digital passport for each fabric roll, ensuring complete traceability and transparency throughout the production process. By merging production metadata with ERP data, the solution establishes mapping logic to connect ERP roll data with Smartex data, validating across multiple fields to ensure accuracy and consistency. This includes details such as machine make and model, production parameters like takedown tension and RPMs, yarn suppliers, and more.

Furthermore, the system tracks the roll assignment and destination by utilizing information from both the Smartex platform and the customer's ERP system to determine the next factory destination for the roll. This information is updated in real-time on the LOOP Platform, facilitating efficient logistics management and production planning. Moreover, the ERP data is instrumental in tracing the roll within the company's facilities and across different locations every time the QR code is scanned. Each scan records the information with a timestamp and location, ensuring full traceability of the roll throughout its journey, from production to distribution. This meticulous tracking and recording process guarantees transparency, accuracy, and efficiency in managing the fabric rolls within the textile production chain.

The following pertains to LOOP traceability Platform. All information that is collected pertaining each of the rolls is added to the database that is the basis of the platform, and where information can be directly inputted by the user, can received previous information from predeceasing processes and can also receive information from following process such as finishing and dyeing during which the fabrics are processes and finalized. One key information that is contained in this database are the Defects and Anomalies contained in each of the fabric rolls. When "anomalies" and/or defects are detected in a fabric, we automatically categorize them as objective defects or other non-defect anomalies that may or may not be considered defects. The amount of defects, their length, position and properties are then used to classify the roll regarding its quality in one of four classifications: A,B,C D, where A are the rolls with higher quality, and D, are the rolls with a larger number of defects. These quality levels are industry standards that are used to mediate the relations between the different textile companies that compose the industrial textile structure and may be composed by vertical factories (in which a single company has all the processes inhouse) or individual factories that are only focused in one of the processes, such as knitting weaving, dyeing, yarn spinning or cloth manufacturing. The software contains a predetermined classification, according to industry standards, but it can be tailored to the needs of each user (namely the knitting factories) in accordance with their clients. For this they need to adjust the admissible number of defects, position, and length of defective fabric to suit their classification for each of the quality levels. Article definition - A versatile data structure that can completely represent and compare a planned fabric specification and the "real" fabric that is produced, regarding different features such as dimensions (length and width), density, fabric and roll weight, number of defects and their position, processes it has undergone and additional materials (dyes, cleaning chemicals, stabilizers, other treatments for pealing, fire retardant) that are used in its processing. By creating this digital representation of the roll of fabric and the processes it undergoes it's possible to create a digital image of the roll and using the defect mapping it's possible to create an unique identifier of this roll, that can be embedded in the QR code and used for auditing purposes, since it's a unique feature of each roll that distinguishes them even in similar productions. Roll Map / Digital Twin - Digital representation of the roll, with a representation for showing where defects are located in the roll and what images of the roll contains the defect that be easily accessible and used for defect validation and quality classification purposes. In the software platform it's also possible to specify/highlight the defect in the image, as classified by the machine learning models and reduce the ambiguity of only identifying the image where the defect is located.

Digital Factory - Real time production data, with automatic highlighting of problems that can be specific of a machine, reference of yarn that is used, operators' action, combination of circular knitting machine brand and model and fabric that is produced. Using the traceability and management tools the factory manager can have a more precise and complete overview of what is going on the factory, pinpoint issues that may be occurring and act on them to minimize the negative impact in the factory productivity and waste of materials and working hours. With the use of the platform, that contains metrics on each of the machines individually and concentrating information from all the machines for a more high-level analyses, it's possible to monitor and control factories production, also remotely for enhanced user experience and usability. Cross-industry Analysis - Calculating and showing how factories compare to the rest of the regions, industry, etc (particularly in overall equipment efficiency, OEE). LOOP Network & Roll Assignment - Automatically sharing rolls to the knitter's customer, giving them information about their ordered material before it arrives.

To ensure authentication and integrity of data in the fabric roll traceability system, a hash code is generated from the fabric roll data. The hash code is a unique and irreversible representation of the roll's data, and it is used to verify the authenticity of the roll and detect any alterations to the data. When a new fabric roll is processed by the system, relevant roll data is used as input to a hash algorithm, which produces a unique hash code based on that information. This hash code is then associated with the fabric roll and stored in the system's centralized database. To ensure the robustness and randomness of the hash code, recognized cryptographic hash algorithms such as SHA-256 or SHA-512 are used. These algorithms are designed to produce unique and random hashes, even when small changes are made to the input data. In the event of hash collisions, where two different sets of data produce the same hash code, additional measures are implemented to mitigate this issue. A common approach is to use salting techniques, where a unique value (salt) is added to the data before calculating the hash, making it less likely for two different inputs to produce the same hash result. The size and complexity of the hash code directly affect the security and integrity of the data. Larger and more complex hashes tend to be more secure against tampering or manipulation attempts, as they increase the difficulty of generating hash collisions or reversing the hash to obtain the original data. In addition to the hash code, additional security measures are implemented to protect against hash collisions and ensure data integrity. This may include using digital signatures to authenticate the data, encrypting stored and transmitted data, and strict access control to the system to prevent unauthorized changes to the data. The hash code generated from the fabric roll data is essential for authenticating and ensuring data integrity in the traceability system.

The following pertains to connecting textiles. The present disclosure connects textiles like never before and puts an end to the lagging traceability and digitization that has held the industry back for far too long.

The present disclosure gives the possibility of quickly scanning any fabric roll and instantly access information about its production history and quality. As a result, it is the ultimate tool for textile manufacturers looking to stay ahead of the curve in a rapidly-evolving industry.

With an initial focus on innovative knitting factories and vertically integrated facilities, Smartex LOOP traceability platform ensures that production information per fabric roll is accessible, accurate, and verifiable. This solution eliminates the problem of unreliable fabric markers that can't withstand certain production processes, and ensures that key production information for each fabric roll is easily available and never lost. This enables factories to track the root cause(s) of any individual fabric roll issues, back to the exact machine, worker, or yarn supplier.

Smartex LOOP is designed to make textile factory operations run more smoothly and effectively by enabling sharing of valuable insights with production partners. This way, for example, dye houses can address minor defects caused in knitting before they worsen and cause irreversible damages, such as oil stains. Additionally, quality control can be better coordinated between knitting facilities and dye houses, resulting in fewer late orders, less waste, and minimal overproduction.

By providing clear product quality evidence via the Smartex Core system, time-consuming and expensive litigations with upstream (e.g. yarn suppliers) and downstream (e.g. dye houses) customers can be resolved quickly. Smartex LOOP's unique IDs allows customers to only take responsibility for their production, with no confusion or misallocation of blame. The Smartex LOOP system enables knitting facilities to ship with confidence by allowing downstream partners to approve rolls before delivery, reducing the likelihood of future complaints.

On top of these eco-efficiency benefits, Smartex technologies future-proof businesses by providing foundations for better data collection and communication. Smartex LOOP strengthens trust between direct customers, such as dye houses, as well as end customers, such as fashion brands. In the case of fashion brands, organized and accessible production data will be a unique - and increasingly vital - selling point given the growing legislative, investor and consumer pressure for better supply chain data.

LOOP traceability solution offers a unique key feature with significant implications for the entire industry and our planet. We can transmit verified and non-manually input information on the produced inspected rolls automatically throughout the supply chain. This unalterable data spread across the supply chain, promoting transparency within the industry to the subsequent stage of consumers. The data provided includes critical information such as fabric composition, yarn type, the number of processing stages, the transportation history of the roll, and the location of defects.

The main feature of the solution, the association of the QR code to the physical roll for unique identification, has no interest for the competitors since the Smartex inspection system that is used to create the digital roll is unique and one of the foundations of the output of the present technology.

With the evolution of time, there is an increasing need for adopting a more sustainable lifestyle to protect and preserve our planet. This has an impact on many sectors, including the textile industry, which is a major contributor to pollution worldwide. As a result, consumers are increasingly seeking sustainable clothing options, and this demand is driving players in the industry - such as knitting factories, dye houses, garment factories, and brands - to implement more sustainable and transparent supply chains. The goal is to reduce the environmental impact of the final garment products.

The main goal of the LOOP invention is to improve the transparency and efficiency of the supply chain in conjunction with the Smartex CORE system. The CORE system, which is a previously patented technology, can inspect fabric rolls in the beginning of Tier 2, which includes the knitting and weaving stages, as well as throughout subsequent stages of the supply chain, such as dyeing and garment production. This inspection results in the creation of a digital twin roll, which is then connected to a QR that is heat pressed on the roll, providing access to any defects location and type in the produced rolls. The LOOP, which is the invention targeted for patent protection, when combined with CORE, serves as a traceability solution that has the potential to reduce costs and mitigate the environmental impact of the textile industry by disseminating knowledge throughout the supply chain. This is a novel traceability solution when compared to competitor's solutions as it shows the textile industry players where the defects are occurring in the production or processing of rolls that were provided by the CORE system, as well as other information such as where the roll came from, type of fabric structure, and yarn material and thickness.

In sum, LOOP is a type of traceability that promotes transparency in the textile industry since the end consumer can know exactly what he is buying and the environmental cost of each piece of garment. This could have an enormous impact on protecting our environment and preventing greenwashing.

Some of the advantages are:
Creation of an inviolable relation between the QR code and the roll that is verifiable throughout the textile processes based in the defect mapping in the roll, unique to each one;
Replace traditional methods that are used in factories, based in handwritten papers that accompany the rolls, or hand written information in the rolls, by printed labels that are attached to the roll, cannot be removed and contain a URL for an unique database entry, that can be updated and easily accessed, according to the defined access to the database.
Reduce the number of manual tasks from operators, saving time and reducing the potential errors in labelling the rolls;
Increase the accuracy of production data that is fully reliable, updated in real time and cannot be tampered with;
Better reporting accuracy and error elimination based on the use of the printed labels;
Traceability data without data flaws, missed entries in databases, mislabelled rolls, or fabric rolls lost in factories due to poor labelling or loss in between processes.
Association of the digital twin of the roll to the physical label that assures the veracity of the roll, that can be audited and does not depend on human operator to maintain traceability and location of the rolls.

It is disclosed a fabric roll traceability system comprising an electronic data processor arranged to: receive indication of new fabric roll from the inspection system installed in the knitting machine that perform inspection of the roll and records images of 100% of the roll surface; issue an unique identification code for the fabric roll that will be used as unique identifier of the roll; create an image including said identification code with an encoded 1D or 2D barcode comprising said identification code and additional information on the roll and it's properties; outputting said image for printing a label to be applied to the fabric roll.

Apply the label on the roll using a heat press that, by means of pressure and heat, fuses the label to the fabric, so it cannot be removed or tampered with. Alternately, other labelling methods can be used such as adhesive, sewing or engraving in the fabric roll, being the main requirements the survival of the label to following textile processes (including being exposed to high temperature, water, water vapour, chemicals with pH between 4 and 11, mechanical stress and abrasion) ;
In an embodiment, the data processor is arranged to: receive fabric roll data for the fabric roll; store the received fabric roll data and the identification code in a database.

In an embodiment, the received fabric roll data comprises fabric roll defect data and/or fabric roll images and defect mapping with coordinates in the roll.

In an embodiment, the encoded 1D or 2D barcode comprises a URL, Uniform Resource Locator, comprising said identification code.

In an embodiment, the data processor is arranged to serve a webpage when said URL is fetched, wherein said webpage comprises fabric roll data.

In an embodiment, the data processor is arranged to: receive fabric roll data for the fabric roll; calculate a hash function on the received fabric roll data; issue an identification code for the fabric roll, wherein said identification code comprises the calculated hash function result.

In an embodiment, the data processor is arranged to: store the received fabric roll data and the identification code in a database.
In and embodiment the database can receive information from other sources such as ERP and MES software's and link this information to the roll, and manufacturing steps, connecting information about the knitting process to additional information of the finishing, dyeing, and confection stages;
In an embodiment the information that is collected and integrated in the database can be used for latter stages of recycling and reuse of the fabrics, based on all the information that has been collected throughout the production of the fabrics, from the raw materials to manufacturing;
It is also disclosed a Fabric roll traceability system comprising an electronic data processor arranged to: receive indication of the production of a new fabric roll; issue an identification code for the fabric roll; create an image including said identification code with an encoded 1D or 2D barcode comprising said identification code; outputting said image for printing a label to be applied to the fabric roll; wherein the data processor is further arranged to: receive fabric roll data for the fabric roll, wherein fabric roll data comprises roll production characteristics; store the received fabric roll data and the identification code in a database.

In an embodiment, the received fabric roll data comprises fabric roll defect data comprising defect location, in particular further comprising defect dimension, defect type, defect relative position, or combinations thereof, in particular further comprising fabric roll images, time of roll production, roll production machine, used raw materials, operator responsible for the roll production machine, raw materials properties, or combinations thereof. Defect relative position is a key concept, since the distance between the defects will change during the fabric processing and a relative position of the fabrics is recorded and adjusted accordingly to the changes in the fabric dimensions, that usually shrinks, as it undergoes dyeing and finishing processes. The shrinking percentage must be factored in when using the defects and they position when in use to identify the fabric roll. Defect location may comprise a defect relative position, i.e, the distances between defects. In this way, even if the roll is cut or shrunk, the distances within the fabric remain proportional.

It is also disclosed a fabric roll labelling station for applying a heat-press label to a fabric roll, comprising: a tablet for control and operation of the printing station, a printer for printing the heat-press label comprising a 1D or 2D barcode; label material and ink film resistance to the harsh textile processes, a heat-press comprising a mechanical press and a heat pad for applying and pressuring the heat-press label onto fabric of the fabric roll; a support framework for holding the printer and the heat-press.

In an embodiment, the fabric roll labelling station can comprise a data processor connected to the printer, wherein the data processor is arranged to print two labels in sequence, in particular a blank label and a printed label, or two identical printed labels. The purpose of adding multiple labels is to increase the mechanical stability of the labels, needed for high tension knitted fabrics.

In an embodiment, the data processor is arranged to switch between two states: a first state where the data processor is arranged to print two labels in sequence, in particular a blank label and a printed label, or two identical printed labels, for heat pressing the two labels together to the fabric roll; and a second state where the data processor is arranged to print each label individually for separately heat pressing each label to the fabric roll.

In an embodiment, wherein the fabric roll data comprises defect mapping of the fabric roll for use as unique identifier of the roll, in particular the defect mapping comprising type of defect, location, dimensions, relative position, or combination thereof.

In an embodiment, the data processor is arranged to switch between two states: switching to the first state if the data processor detects or receives indication that the fabric is rugous or undulated; and switching to the first state if the data processor detects or receives indication that the fabric is not rugous neither undulated.

In an embodiment, the support framework comprises a roll support for holding the fabric roll for the labelling process.

In an embodiment, the roll support is arranged to hold the fabric roll while allowing the roll to be rolled out and rolled in.

In an embodiment, the roll support comprises a scale for weighing the roll, receiving information from the scale, and adding the measured weight to the database;

In an embodiment, the support framework comprises a movable part for receiving the printer, in particular the movable part being a slidable part.

In an embodiment, a fabric roll labelling station can comprise a display for displaying information concerning the fabric roll and interact with the printer and labelling machine.

In an embodiment, the press comprises a lever arm for applying pressure to the heat-press label.

In an embodiment the press is fully automated for the temperature, time, and applied pressure, and it's controlled through the use of the screen;

It is also disclosed a system comprising a circular knitting machine comprising a fixed support structure, and a rotational support structure, an integrated inspection system detects defects and monitor the quality of the fabric, further comprising the fabric roll labelling station according to any of the previous embodiments.

It is also disclosed a system comprising a circular knitting machine or loom comprising the fabric roll traceability system according to any of the previous embodiments.

In an embodiment, the principle of operation that is adjacent to the system can be a creation of the physical station that holds the printer, and tablet, installed on the shop floor; use of new types of labels for roll identification; create the digital tool to transform information about the roll into a unique identifier code; apply the label to the fabric roll, distribute along the value chain the physical tools to read the codes, collect the locations and additional information into the database, and the digital platform to manage the information in an integrated way.

In an embodiment, the hardware can comprise: a label printer- - printing of the labels that will be attached to the rolls; Polymeric labels - labels that will be printed and then attached to the rolls using heat and pressure; Thermal press - to apply heat and pressure in a controlled and reproducible process to the labels so they will fuse with the fabric, so they cannot be removed; Tablet - placed in the station that is used to input information and follow up on the orders; Scanner - different types of hardware able to read the label and present basic information, and send the information to the database for recording the location of the roll and time the measurement was performed;
The software can comprise: Digital platform - a platform for data integration, QR code generation, and management; Software for tablet - android based software that communicates with the printer, digital platform and Smartex Core software; API - for integration with existing data platforms that store data related to yarns properties, chemicals that are used in the fabric processing.

### BRIEF DESCRIPTION OF THE DRAWINGS

The following figures provide preferred embodiments for illustrating the disclosure and should not be seen as limiting the scope of disclosure.

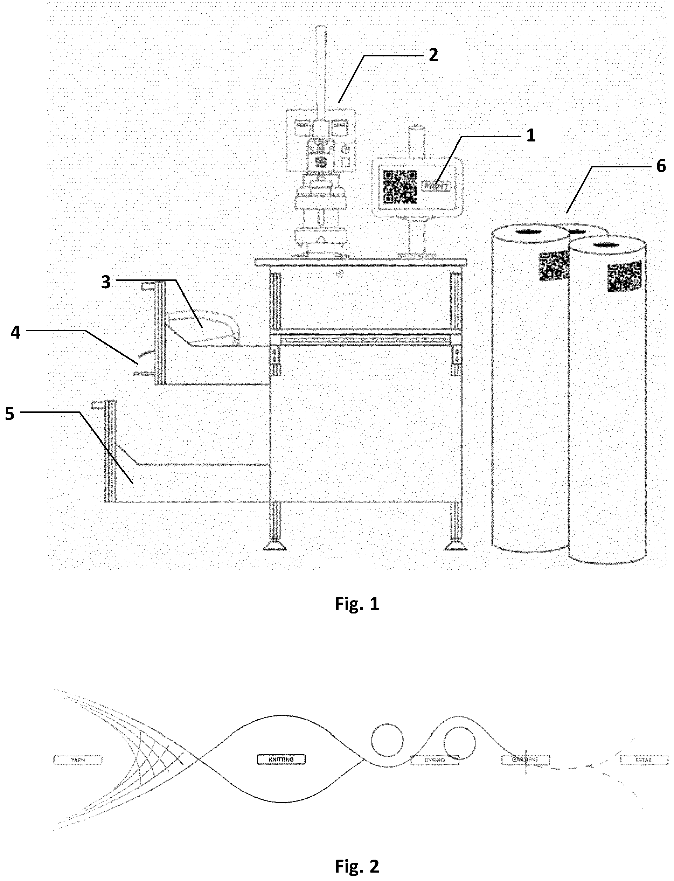

**Figure 1****:** Schematic conceptual representation of an embodiment of a machine to track fabric-roll.
**Figure 2****:** Schematic representation of an embodiment of a data flow chart with a general view of the disclosed process.

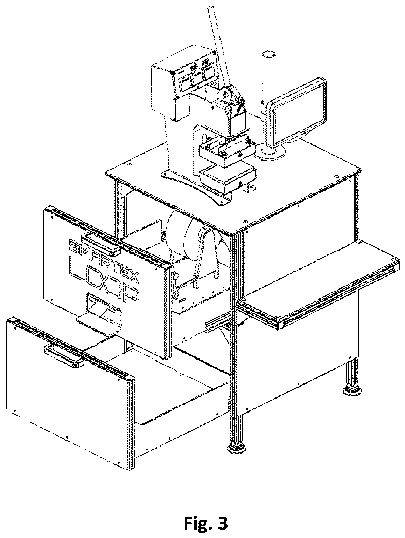

**Figure 3****:** Schematic representation of the main elements of a main embodiment with machine to track fabric-roll with open drawer.

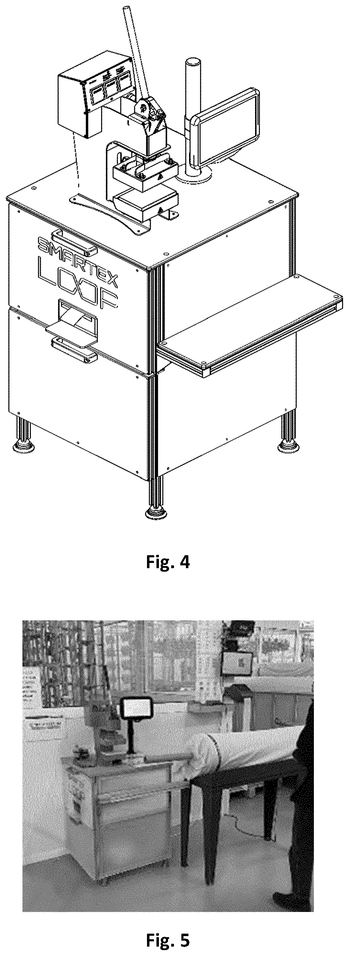

**Figure 4****:** Schematic representation of the main elements of a main embodiment with machine to track fabric-roll.
**Figure 5****:** Schematic representation of the perspective view of main elements of an embodiment.

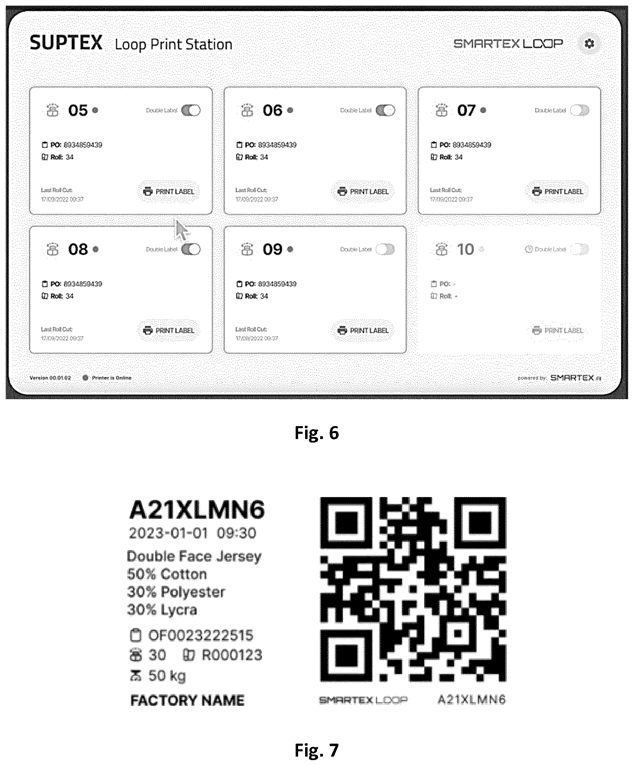

**Figure 6****:** Schematic representation of an embodiment of a system of workflows to verify data accuracy.
**Figure 7****:** Schematic representation of an embodiment with a QR code.

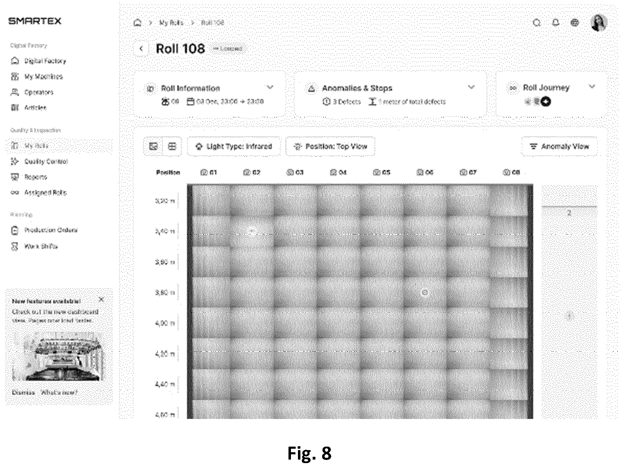

**Figure 8****:** Schematic representation of an embodiment with alternative of a system of workflows to verify data accuracy.

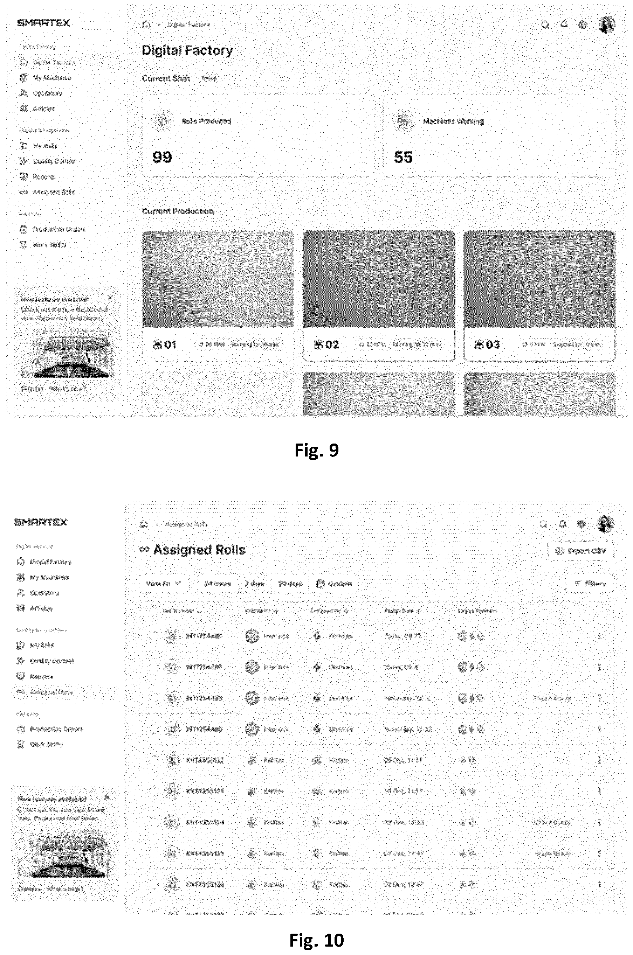

**Figure 9****:** Schematic representation of an embodiment with alternative of a system of workflows to verify data accuracy.
**Figure 10****:** Schematic representation of an embodiment with alternative of a system of workflows to verify data accuracy.

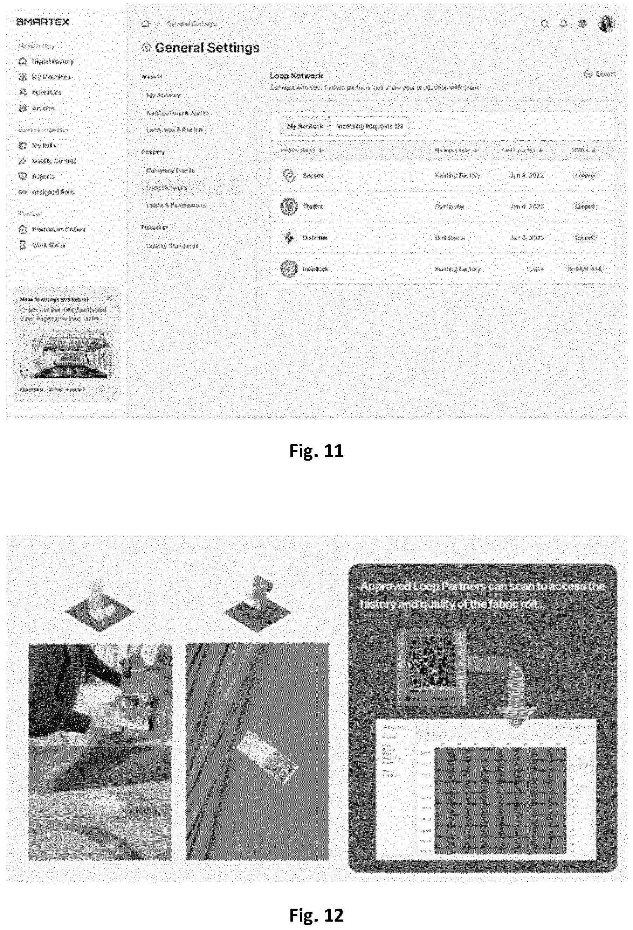

**Figure 11****:** Schematic representation of an embodiment with alternative of a system of workflows to verify data accuracy.
**Figure 12****:** Schematic representation of an embodiment of a data flow chart.

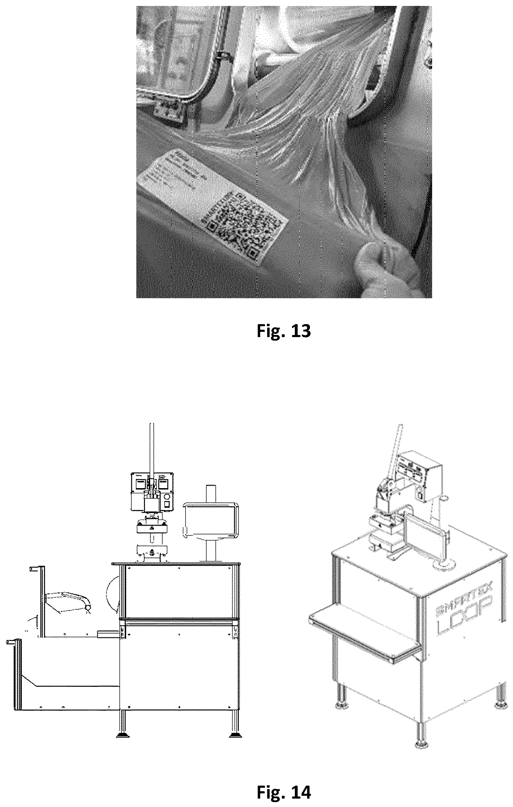

**Figure 13****:** Schematic representation of the perspective view of main elements of an embodiment.
**Figure 14****:** Schematic representation of the perspective view of main elements of an embodiment.

### DETAILED DESCRIPTION

The system according to an embodiment of the present disclosure is typically comprised by a fabric roll traceability system comprising an electronic data processor arranged to: receive indication of new fabric roll; issue an identification code for the fabric roll; create an image including said identification code with an encoded 1D or 2D barcode comprising said identification code; outputting said image for printing a label to be applied to the fabric roll.

The term "comprising" whenever used in this document is intended to indicate the presence of stated features, integers, steps, components, but not to preclude the presence or addition of one or more other features, integers, steps, components or groups thereof. The disclosure should not be seen in any way restricted to the embodiments described and a person with ordinary skill in the art will foresee many possibilities to modifications thereof. The above-described embodiments are combinable. The following claims further set out particular embodiments of the disclosure.

The Fabric Roll Traceability System comprises several components and functionalities designed to enable accurate and efficient tracking of fabric rolls:
Electronic Data Processor - Receives indications of new fabric rolls from the inspection systems installed in the circular knitting machine. The electronic data processor functions as the central hub for receiving notifications or signals indicating the production of a new fabric rolls from one of the CMKs where the inspection systems are installed. This ensures that each fabric roll entering the system can be promptly identified labelled and tracked.

Generates unique identification codes for each fabric roll: Upon receiving indications of new fabric rolls, the data processor generates unique identification codes for each roll. These codes serve as distinct identifiers for individual fabric rolls throughout the tracking process, and rest of the supply chain, facilitating accurate and reliable identification.

Encodes identification codes into 1D or 2D barcodes for label printing: After generating the identification codes, the data processor encodes them into either one-dimensional (1D) or two-dimensional (2D) barcodes. These barcodes contain the unique identification information and are formatted for compatibility with label printing.

Facilitates integration with existing production workflows and databases - The data processor is designed to seamlessly integrate with existing production workflows and databases within the textile manufacturing environment. This integration ensures smooth communication and data exchange between the fabric roll traceability system and other operational systems, such as enterprise resource planning (ERP) or manufacturing execution systems (MES).

Barcode Generation and Label Printing - Creates images containing encoded identification codes for fabric rolls. This component of the system is responsible for generating images that contain the encoded identification codes for fabric rolls. These 1D or 2D images are created based on the unique identification codes generated by the electronic data processor and contain a QR code that can be read by different types of devices, handheld or static.

Outputs images for printing onto labels using a fabric roll labelling station - Once the images containing the encoded identification codes are generated, they are outputted for printing onto labels. These labels are printed and then using a fabric roll labelling station, are applied directly onto the fabric rolls for identification and tracking purposes.

Fabric Roll Labelling Station - composed by several physical elements that are required to print the labels onto the fabric roll, enabling the traceability process. It's composed by a tablet, a printer for the labels, the labels and ink for printing, the heat press, support for the rolls and support structure for the all the components and the roll during the label application process.

Consists of a tablet interface for controlling label printing operations - The fabric roll labelling station includes a tablet interface that allows operators to control the printing operations for fabric roll labels. This interface provides functionalities such as selecting label designs, inputting roll-specific information, and initiating the printing process.

Includes a printer for printing labels with encoded barcodes: Within the labelling station, there is a printer specifically designed for printing labels with encoded barcodes. This printer receives the label designs containing the encoded identification codes and prints them onto adhesive labels for application onto fabric rolls.

Utilizes heat-press technology to affix labels securely onto fabric rolls - After printing, the labels are affixed securely onto fabric rolls using heat-press technology. This process ensures that the labels adhere firmly to the fabric surface, preventing them from being easily removed or tampered with during subsequent manufacturing processes.

Supports adjustment of temperature and pressure settings for different fabric types: The labelling station is equipped with mechanisms for adjusting temperature and pressure settings to accommodate different fabric types. This flexibility ensures optimal label adhesion without causing damage to the fabric material.

Integration with Existing Workflows - Seamlessly integrates with circular knitting machines and other production machinery such as weaving machines - The fabric roll traceability system seamlessly integrates with various production machinery, including circular knitting machines, to streamline fabric roll tracking and management. This integration ensures that fabric roll data is accurately captured and shared across different stages of the manufacturing process.

Collects and stores fabric roll data, including identification codes, defect information, and production parameters - As fabric rolls progress through the production process, the system collects and stores relevant data, including identification codes, defect information, and production parameters. This data is essential for tracking roll movements and location, identifying quality issues, and optimizing production processes.

Enables real-time data sharing and communication with ERP and MES systems - The fabric roll traceability system enables real-time bi directional data sharing and communication with enterprise resource planning (ERP) and manufacturing execution systems (MES). This integration facilitates seamless information exchange, allowing for better coordination of production activities and decision-making processes.

Data Processing and Management that stores fabric roll data and identification codes in a centralized database such as fabric roll data, including identification codes and associated information, which are stored in a centralized database for easy access and retrieval. This centralized approach ensures data consistency and reliability throughout the production chain, enabling integration with other sources of data.

Supports retrieval and analysis of production data for quality control and process optimization - The system supports retrieval and analysis of production data to facilitate quality control and process optimization efforts. By analysing fabric roll data, manufacturers can identify trends, detect anomalies, and implement corrective measures to improve overall production efficiency and quality.

Facilitates traceability of fabric rolls throughout the production chain, from knitting to finishing and distribution - With robust data processing and management capabilities, the system enables comprehensive traceability of fabric rolls throughout the entire production chain. This traceability ensures transparency and accountability at every stage of the manufacturing process, from knitting to finishing manufacturing and distribution.

Quality Control and Reporting - Enables classification of fabric rolls based on defect data and quality parameters. The system enables classification of fabric rolls based on defect data and quality parameters. By analysing defect data and quality parameters, manufacturers can categorize fabric rolls into different quality grades, allowing for effective quality control and management.

Provides detailed reporting and analysis tools for monitoring production performance and identifying areas for improvement - Detailed reporting and analysis tools are available within the system for monitoring production performance and identifying areas for improvement. These tools enable manufacturers to track key performance indicators, analyse production trends, and make data-driven decisions to optimize production processes.

Enhances transparency and accountability in the textile manufacturing process - By providing detailed insights into fabric roll data and production processes, the system enhances transparency and accountability in the textile manufacturing process. Manufacturers can demonstrate compliance with quality standards, regulatory requirements, and customer specifications, thereby building trust and credibility with stakeholders.

In an embodiment, it is disclosed a Fabric Roll Traceability System designed to enable accurate and efficient tracking of fabric rolls throughout the textile manufacturing process. Comprising an Electronic Data Processor, Barcode Generation and Label Printing functionality, a Fabric Roll Labelling Station, Integration with Existing Workflows, Data Processing and Management capabilities, and Quality Control and Reporting features, the system facilitates seamless integration with production workflows and databases. The Electronic Data Processor receives indications of new fabric rolls, generates unique identification codes, and encodes them into barcodes for label printing, that are heat-pressed for secure label affixation. Data processing and management functionalities include storing fabric roll data in a centralized database and facilitating traceability throughout the production chain, and quality control and reporting tools enable classification of fabric rolls based on defect data and quality parameters. This Fabric Roll Traceability System offers a comprehensive solution for improving production efficiency, quality control, and transparency in the textile manufacturing industry.

## Claims

1. Fabric roll traceability system comprising an electronic data processor arranged to:
receive indication of the production of a new fabric roll;
issue an identification code for the fabric roll;
create an image including said identification code with an encoded 1D or 2D barcode comprising said identification code;
outputting said image for printing a label to be applied to the fabric roll;
wherein the data processor is further arranged to:
receive fabric roll data for the fabric roll, wherein fabric roll data comprises roll production characteristics;
store the received fabric roll data and the identification code in a database.

2. Fabric roll traceability system according to the previous claim wherein the received fabric roll data comprises fabric roll defect data comprising defect location, in particular further comprising defect dimension, defect type, defect relative position, or combinations thereof, in particular further comprising fabric roll images, time of roll production, roll production machine, used raw materials, operator responsible for the roll production machine, raw materials properties, or combinations thereof.

3. Fabric roll traceability system according to any of the previous claims wherein the encoded 1D or 2D barcode comprises a URL, Uniform Resource Locator, comprising said identification code.

4. Fabric roll traceability system according to the previous claim wherein the data processor is arranged to serve a webpage when said URL is fetched, wherein said webpage comprises fabric roll data.

5. Fabric roll traceability system according to any of the previous claims wherein the fabric roll data comprises defect mapping of the fabric roll for use as unique identifier of the roll, in particular the defect mapping comprising type of defect, location, dimensions, relative position, or combination thereof.

6. Fabric roll traceability system according to any of the previous claims wherein the data processor is arranged to:
after receiving fabric roll data for the fabric roll, calculate a hash function on the received fabric roll data;
issue the identification code for the fabric roll comprising the calculated hash function result.

7. System comprising a circular knitting machine or loom comprising the fabric roll traceability system according to any of the previous claims 1 - 6.

8. Fabric roll labelling station for applying a heat-press label to a fabric roll, comprising:
a printer for printing the heat-press label comprising a 1D or 2D barcode;
a heat-press comprising a press and a heat pad for applying and pressuring the heat-press label onto fabric of the fabric roll;
a support framework for holding the printer and the heat-press.

9. Fabric roll labelling station according to the previous claim comprising a data processor connected to the printer, wherein the data processor is arranged to print two labels in sequence, in particular a blank label and a printed label, or two identical printed labels.

10. Fabric roll labelling station according to the previous claim wherein the data processor is arranged to switch between two states:
a first state where the data processor is arranged to print two labels in sequence, in particular a blank label and a printed label, or two identical printed labels, for heat pressing the two labels together to the fabric roll; and
a second state where the data processor is arranged to print each label individually for separately heat pressing each label to the fabric roll.

11. Fabric roll labelling station according to the previous claim wherein the data processor is arranged to switch between two states:
switching to the first state if the data processor detects or receives indication that the fabric is rugous or undulated; and
switching to the first state if the data processor detects or receives indication that the fabric is not rugous neither undulated.

12. Fabric roll labelling station according to any of the previous claims wherein the support framework comprises a roll support for holding the fabric roll, in particular the roll support is arranged to hold the fabric roll while allowing the roll to be rolled out and rolled in, further in particular the roll support comprising a scale for weighing the roll.

13. Fabric roll labelling station according to any of the claims 8 -12 wherein the support framework comprises a movable part for receiving the printer, in particular the movable part being a slidable part.

14. Fabric roll labelling station according to any of the claims 8 -13 wherein the press comprises a lever arm for applying pressure to the heat-press label.

15. System comprising a circular knitting machine or loom comprising the fabric roll labelling station according to any of the previous claims 8 -14.
